# EUROPEAN PATENT SPECIFICATION

(11) **EP 4 210 027 B1**
(45) Date of publication and mention of the grant of the patent: **09.07.2025**
(21) Application number: 20952151.7
(22) Date of filing: 21.10.2020
(51) Int. Cl.: G09B 23/28, G01N 1/28

(54) **BIONIC ORAL DEVICE**
ORALE BIONISCHE VORRICHTUNG
DISPOSITIF ORAL BIONIQUE

(30) Priority: 01.09.2020 CN 202010906266
(43) Date of publication of application: 12.07.2023
(73) Proprietor: XIAODONGYIJIAN (SUZHOU) INSTRUMENTS AND EQUIPMENT CO., LTD., Jiangsu 215000 (CN)
(72) Inventor: CHEN, Xiaodong, Auckland, 1062 (NZ); LIAO, Zhenkai, Suzhou, Jiangsu 215000 (CN); DING, Qiyang, Suzhou, Jiangsu 215000 (CN); LIU, Yang, Suzhou, Jiangsu 215000 (CN); WANG, Jingjing, Suzhou, Jiangsu 215000 (CN)
(74) Representative: RGTH
(86) International application number: PCT/CN2020/122320
(87) International publication number: WO 2022/047909

(56) References cited:
- CN-A- 103 558 104
- CN-A- 106 239 480
- CN-A- 107 063 904
- CN-A- 107 063 904
- CN-A- 110 349 488
- CN-A- 110 883 766
- CN-A- 111 175 191
- FR-A1- 3 007 181
- US-A1- 2019 096 288
- US-B2- 10 582 995

## Description

### FIELD OF THE INVENTION

The present invention relates to the field of bionic oral cavity technologies, and more particularly to a bionic oral cavity device.

### DESCRIPTION OF THE RELATED ART

Mastication in the oral cavity is part of the lower jaw movement and involves relatively complex forms of movement. In the case of complete and symmetrical dentition, cusp coordination, equal functional potential, and no occlusal dysfunction, chewing should take place alternately on two sides in multiple directions. Mastication generally comprises three basic stages: cutting, crushing, and grinding. A bionic oral movement device in the prior art usually only has the function of crushing food with the upper teeth in the upper jaw and the lower teeth in the lower jaw but ignores the movement of the cheeks and the movement of the tongue during the oral movement. Therefore, the existing bionic oral movement device cannot truly imitate the oral environment.

CN 107 063 904 A discloses a bionically designed chewing equipment that mimics human oral activity. It includes a frame, bionical oral cavity, dynamical system, and TT&C system to evaluate food texture scientifically by simulating human chewing movements and oral conditions. It features adjustable components and sensors for precise measurements.

The invention disclosed in CN 103 558 104 A is a bionical food brittleness tester that simulates human chewing to measure food fragility. It integrates a chaw simulation device, embrittlement signal acquisition, and data management systems to analyze mechanical and acoustic signals, predicting food brittleness accurately by mimicking the human masticatory and auditory systems.

FR 3 007 181 A1 provides an artificial mouth designed to mimic human chewing by using two plates to deconstruct food matrices. It studies the release of volatile compounds and sapid molecules, simulating breathing and swallowing, allowing simultaneous analysis of liquid and gaseous fractions involved in flavor perception.

CN 111 175 191 A depicts a biomimetic chewing device designed to simulate the oral cavity for testing the rheological properties of food, capturing more accurate mouthfeel data. It features bionic teeth, a tongue, and hydraulic mechanisms to mimic chewing, enhancing evaluation of food texture and processing.

### SUMMARY OF THE INVENTION

A technical problem to be resolved by the present invention is to provide a bionic oral cavity device.

To resolve the foregoing technical problems, the present invention provides a bionic oral cavity device, comprising: a bionic lower jaw assembly, a bionic upper jaw movement assembly disposed on an upper side of the lower jaw assembly, a bionic cheeks movement assembly disposed on left and right sides of the lower jaw assembly, a bionic tongue movement assembly disposed on a lower side of the lower jaw assembly, a feeding movement assembly disposed on a front side of the lower jaw assembly, a blockage assembly disposed on a rear side of the lower jaw assembly, and a saliva injection assembly.

The bionic upper jaw movement assembly comprises an upper jaw assembly and a first crank slider mechanism controlling the upper jaw assembly to move vertically, the first crank slider mechanism comprises a first eccentric wheel, a first motor driving the first eccentric wheel to rotate, a first connecting rod, and a first sliding rod, an upper end of the first connecting rod is rotatably connected to the first eccentric wheel, a lower end of the first connecting rod is rotatably connected to an upper end of the first sliding rod, the bionic upper jaw movement assembly further comprises a first fixing plate, the first sliding rod is vertically slidably mounted on the first fixing plate, a lower end of the first sliding rod is capable of driving the upper jaw assembly to move vertically, the bionic upper jaw movement assembly further comprises a first sensing sheet mounted on the first eccentric wheel and a first sensor corresponding to the first sensing sheet; every time when the first eccentric wheel rotates one circle, the first sensing sheet passes through the first sensor once, and when the first sensor senses the first sensing sheet, a pause signal is capable of being sent to a first drive motor, and the first drive motor is controlled to pause.

A pressure sensor is further disposed between the lower end of the first sliding rod and the upper jaw assembly, a slider is further disposed on the upper jaw assembly, the slider is transversely slidably connected to an upper side of the upper jaw assembly, and the lower end of the first sliding rod is fixedly connected to the slider.

The upper jaw assembly comprises an upper jaw body and an upper cover disposed on the upper jaw body, the upper jaw body has a cavity with an opening facing upward, an elastic sealing member is disposed at the opening of the cavity, the upper cover covers the opening of the cavity, the elastic sealing member produces a sealing effect, and two circulating water ports allowing communication between the cavity and external circulating water are further provided on the upper jaw body.

Upper teeth are mounted under the upper jaw body, the lower jaw assembly comprises a bottom wall, two transversely disposed sidewalls, and a rear wall located behind the two sidewalls, a discharge port is provided in the rear wall, the blockage assembly comprises a blockage sheet blocking the discharge port, a fifth motor driving the blockage sheet to move longitudinally, during a mastication in the oral cavity, the blockage sheet is capable of blocking the discharge port; two rows of lower teeth corresponding to the upper teeth are provided on the bottom wall, the upper jaw assembly is capable of being driven by the first crank slider mechanism to be inserted into the lower jaw assembly, to make the upper teeth and the lower teeth contact and press against each other, a cheeks film is disposed on the two sidewalls of the lower jaw assembly, a tongue film is provided on the bottom wall, and the cheeks film and the tongue film are transparent elastic films.

The feeding movement assembly comprises a feeding channel, the feeding channel is in communication with the front side of the lower jaw assembly, a feeding jacking block is disposed in the feeding channel, the feeding jacking block is used to push food in the feeding channel to the lower jaw assembly, the feeding movement assembly further comprises a drive assembly used to drive the feeding jacking block to move, the drive assembly comprises a rack and a pushing rod that are connected to the feeding jacking block, the rack and the pushing rod are disposed in parallel to each other, the drive assembly further comprises a fourth motor and a gear driven by the fourth motor, the gear is engaged with the rack, the feeding movement assembly further comprises a vertically disposed fourth fixing plate, the rack and the pushing rod slidably pass through the fourth fixing plate, and the distal ends of the rack and the pushing rod are fixedly connected by a connecting block.

Preferably, the saliva injection assembly comprises an injection cylinder, a water bath pot in communication with the injection cylinder, and a heating coil, the water bath pot is in communication with the upper jaw assembly to form water circulation, and the heating coil heats a liquid in the water bath pot.

Preferably, a first protruding portion is disposed on either a left side or a right side of the upper jaw body, a second protruding portion matching the first protruding portion is disposed on one sidewall of the lower jaw assembly, an elastic member is disposed on the other sidewall of the lower jaw assembly, the elastic member is capable of applying a pushing force to the upper jaw assembly, and as the upper jaw assembly moves downward, the second protruding portion is capable of pressing the first protruding portion, to enable the upper jaw assembly to overcome the pushing force of the elastic member to move toward a side close to the elastic member.

Preferably, the bionic cheeks movement assembly comprises a second crank slider mechanism and a bionic cheeks jacking block driven by the second crank slider mechanism, the second crank slider mechanism comprises a second eccentric wheel, a second motor driving the second eccentric wheel to rotate, a second connecting rod, and a second sliding rod, one end of the second connecting rod is rotatably connected to the second eccentric wheel, the other end of the second connecting rod is rotatably connected to an end of the second sliding rod, the bionic cheeks movement assembly further comprises a second fixing plate, the second sliding rod is transversely slidably mounted on the second fixing plate, and an end portion of the second sliding rod is capable of driving the bionic cheeks jacking block to push the cheeks film.

Preferably, the bionic tongue movement assembly comprises a third crank slider mechanism and a bionic tongue jacking block driven by the third crank slider mechanism, the third crank slider mechanism comprises a third eccentric wheel, a third motor driving the third eccentric wheel to rotate, a third connecting rod, and a third sliding rod, one end of the third connecting rod is rotatably connected to the third eccentric wheel, the other end of the third connecting rod is rotatably connected to one end of the third sliding rod, the bionic tongue movement assembly further comprises a third fixing plate, the third sliding rod is vertically slidably mounted on the third fixing plate, and an end portion of the third sliding rod is capable of driving the bionic tongue jacking block to push the tongue film.

The bionic oral cavity device in the present invention has the following beneficial effects:
1. The bionic upper jaw movement assembly in the present application can move transversely as well as vertically to complete crushing and grinding of food, thereby simulating a process that food breaks down in the oral cavity.
2. The bionic upper jaw movement assembly in the present application is provided with a pressure sensor. A pressure at which an upper jaw assembly presses downward can be controlled according to a pressure measured by the pressure sensor, so that a chewing force can be adequately controlled, and indexes such as hardness and springiness of food can be objectively evaluated.
3. The lower jaw assembly in the present application is made of a transparent material, making it convenient for an experimenter to observe a process that food breaks down inside the oral cavity.
4. The lower jaw assembly in the present application has a cheeks film and a tongue film that are made of an elastic and transparent material, which coordinate with the bionic cheeks movement assembly and the bionic tongue movement assembly to simulate the cheeks and tongue of the oral cavity.
5. The saliva injection assembly in the present application can inject a liquid at about 37°C into the upper jaw assembly, making temperature in the oral cavity close to the real temperature of human body.
6. The teeth in the present application can slide into a clamping groove, so that the teeth are stable and fixed and can be conveniently disassembled and cleaned.

### BRIEF DESCRIPTION OF THE DRAWINGS

FIG. 1 is a schematic structural diagram of a bionic oral cavity device according to the present application;
FIG. 2 is a schematic structural diagram of a bionic upper jaw movement assembly according to the present application;
FIG. 3 is a schematic structural side view of a bionic upper jaw movement assembly according to the present application;
FIG. 4 is a schematic structural diagram of an upper jaw assembly according to the present application;
FIG. 5 is a schematic structural diagram of a lower jaw assembly according to the present application;
FIG. 6 is a schematic structural diagram of an upper jaw assembly and a lower jaw assembly according to the present application;

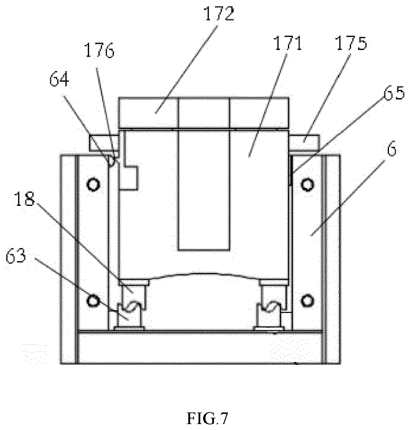

FIG. 7 is a schematic structural diagram of an upper jaw assembly and a lower jaw assembly according to the present application;
FIG. 8 is a schematic diagram of movement trajectories of an upper teeth and lower teeth according to the present application;
FIG. 9 is a schematic structural diagram of a bionic tongue movement assembly according to the present application;
FIG. 10 is a schematic structural diagram of a bionic cheeks movement assembly according to the present application;
FIG. 11 is a schematic structural diagram of a feeding movement assembly according to the present application;
FIG. 12 is a schematic structural diagram of a saliva injection assembly according to the present application; and

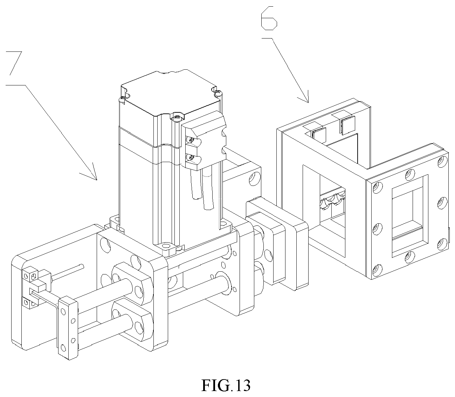

FIG. 13 is a schematic structural diagram of a blockage assembly according to the present application.

Where: 1. bionic upper jaw movement assembly; 2. bionic cheeks movement assembly; 3. bionic tongue movement assembly; 4. feeding movement assembly; 5. saliva injection assembly; 6. lower jaw assembly; and 7. blockage assembly;
11. first eccentric wheel; 12. first connecting rod; 14. first sliding rod; 15. pressure sensor; 16. slider; 17. upper jaw assembly; 18. upper teeth; 19. first fixing plate; 110. first sensing sheet; 111. first sensor; and 112. first motor;
171. upper jaw body; 172. upper cover; 173. elastic sealing member; 174. cavity; 175. circulating water port; 176. first protruding portion; 177. first through hole; and 178. second through hole;
6. lower jaw assembly; 61. cheeks film; 62. tongue film; 63. lower teeth; 64. second protruding portion; 65. elastic member; and 66. discharge port;
31. third motor; 32. third eccentric wheel; 33. third connecting rod; 34. third sliding rod; 35. third fixing plate; 36. third eccentric shaft; 37. bionic tongue jacking block; 38. third sensor; and 39. third sensing sheet;
21. second eccentric wheel; 22. second connecting rod; 23. second sliding rod; 24. second fixing rod; 25. bionic cheeks jacking block; 26. second sensing sheet; and 27. second sensor;
41. feeding channel; 42. feeding jacking block; 43. rack; 44. pushing rod; 45. connecting block; 46. gear; 47. fourth motor; and 48. fourth fixing plate; and
51. injection cylinder; 52. water bath pot; and 53. heating coil.

### DETAILED DESCRIPTION OF THE PREFERRED EMBODIMENTS

The present invention is further described below with reference to the accompanying drawings and specific embodiments, to enable a person skilled in the art to better understand and implement the present invention. However, the embodiments are not used to limit the present invention.

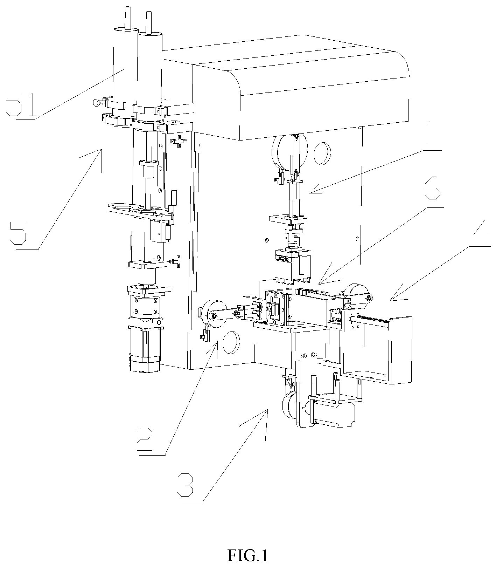

FIG. 1 shows a bionic oral cavity device in the present application, comprising: a bionic lower jaw assembly 6, a bionic upper jaw movement assembly 1 disposed at an upper side of the lower jaw assembly 6, a bionic cheeks movement assembly 2 disposed on left and right sides of the lower jaw assembly 6, a bionic tongue movement assembly disposed on a lower side of the lower jaw assembly 6, a feeding movement assembly 4 disposed on a front side of the lower jaw assembly 6, a blockage assembly 7 disposed on a rear side of the lower jaw assembly 6, and a saliva injection assembly 5.

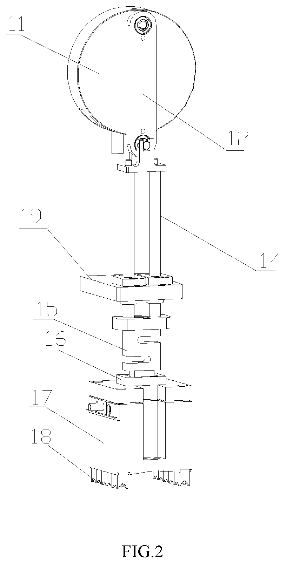

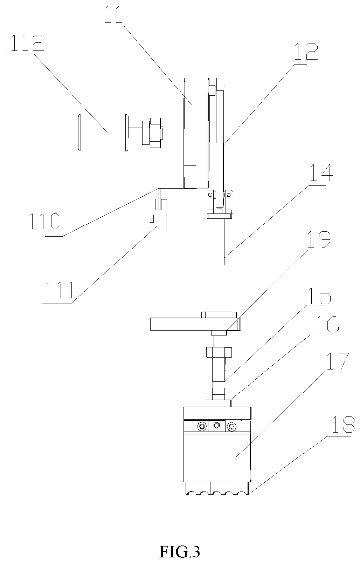

FIG. 2 and FIG. 3 show the bionic upper jaw movement assembly 1 in the present application. The bionic upper jaw movement assembly 1 comprises an upper jaw assembly 17 and a first crank slider mechanism 16 for controlling the upper jaw assembly 17 to move vertically. The first crank slider mechanism 16 comprises a first eccentric wheel 11, a first motor 112 for driving the first eccentric wheel 11 to rotate, a first connecting rod 12, and a first sliding rod 14. An upper end of the first connecting rod 12 is rotatably connected to the first eccentric wheel 11. A lower end of the first connecting rod 12 is rotatably connected to an upper end of the first sliding rod 14. The bionic upper jaw movement assembly 1 further comprises a first fixing plate 19. The first sliding rod 14 is vertically slidably mounted on the first fixing plate 19.

A lower end of the first sliding rod 14 is capable of driving the upper jaw assembly 17 to move vertically.

The bionic upper jaw movement assembly 1 further comprises a first sensing sheet 110 mounted on the first eccentric wheel 11 and a first sensor 111 corresponding to the first sensing sheet 110. Every time when the first eccentric wheel 11 rotates one circle, the first sensing sheet 110 passes through the first sensor 111 once. When the first sensor 111 senses the first sensing sheet 110, a control signal is sent to a first drive motor, and the first drive motor is controlled to pause a while to simulate the rhythm of mastication in the oral cavity.

A pressure sensor 15 is further disposed between the lower end of the first sliding rod 14 and the upper jaw assembly 17.

A slider 16 is further disposed on the upper jaw assembly 17. The slider 16 is transversely slidably connected to an upper side of the upper jaw assembly 17. The lower end of the first sliding rod 14 is fixedly connected to the slider 16.

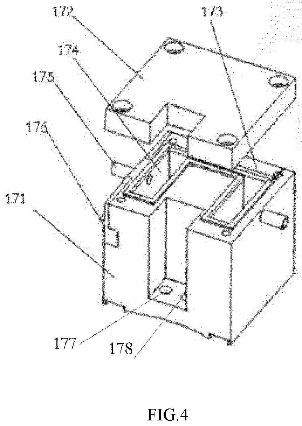

As shown in FIG. 4, the upper jaw assembly 17 comprises an upper jaw body 171 and an upper cover 172 disposed on the upper jaw body 171. The upper jaw body 171 has a cavity 174 with an opening facing upward. An elastic sealing member 173 is disposed at the opening of the cavity 174. The upper cover 172 covers the opening of the cavity 174. The elastic sealing member 173 produces a sealing effect. Two circulating water ports 175 allowing communication between the cavity 174 and external circulating water are further provided on the upper jaw body 171.

Upper teeth 18 are mounted on the bottom of the upper jaw body 171. In a preferred implementation, two longitudinally extending mounting grooves for the upper teeth 18 are provided on a lower side of the upper jaw body 171. Longitudinally extending clamping edges are disposed on left and right sides of the mounting grooves for the upper teeth 18. Clamping grooves matching the clamping edges are provided on the upper teeth 18. The upper teeth 18 are detachably mounted in the mounting grooves for the upper teeth 18 through the clamping grooves. In this assembly manner, the upper teeth 18 may be removed, making assembly and disassembly convenient, thereby facilitating cleaning of the upper jaw.

A first through hole 177 and a second through hole 178 are further provided in the upper jaw body 171. The first through hole 177 is used for injecting saliva into the oral cavity, and the second through hole 178 is used for detecting the smell in the oral cavity.

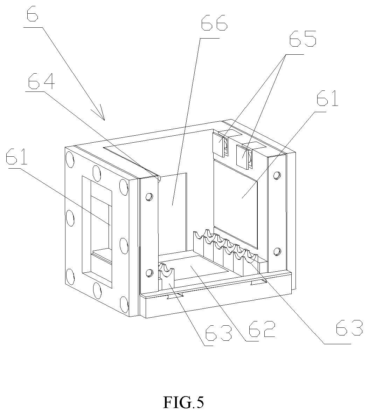

FIG. 5 shows the lower jaw assembly 6 in the present application. The lower jaw assembly 6 comprises a bottom wall, two sidewalls located on the left and right, and a rear wall located behind the two sidewalls. Two rows of lower teeth 63 corresponding to the upper teeth 18 are provided on the bottom wall. The upper jaw assembly 17 is capable of being driven by the first crank slider mechanism 16 to be inserted into the lower jaw assembly 6, so that the upper teeth 18 and the lower teeth 63 contact and press against each other. A cheeks film 61 is disposed on the two sidewalls of the lower jaw assembly 6. A tongue film 62 is provided on the bottom wall. A discharge port 66 is provided in the rear wall of the lower jaw assembly 6.

The cheeks film 61 and the tongue film 62 are made of a transparent elastic material, so that it is convenient for an experimenter to observe a process that food breaks down inside the oral cavity.

An inner surface of the cheeks film 61 is attached to inner surfaces of the two sidewalls of the lower jaw assembly to form a smooth surface. Inner surfaces of the tongue film 62 and the bottom wall of the lower jaw assembly are attached to form a smooth surface. In the lower jaw assembly, both the two sidewalls and the bottom wall have smooth surfaces, thereby further facilitating cleaning.

A first protruding portion 176 is disposed on one of a left side and a right side of the upper jaw body 171. A second protruding portion 64 matching the first protruding portion 176 is disposed on one sidewall of the lower jaw assembly 6. An elastic member 65 is disposed on the other sidewall of the lower jaw assembly 6. The elastic member 65 is capable of applying a pushing force to the upper jaw assembly 17. As the upper jaw assembly 17 moves downward, the second protruding portion 64 is capable of pressing the first protruding portion 176, to enable the upper jaw assembly 17 to overcome the pushing force of the elastic member 65 to move toward a side close to the elastic member 65.

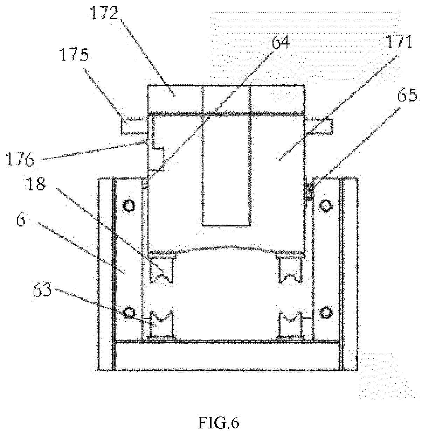

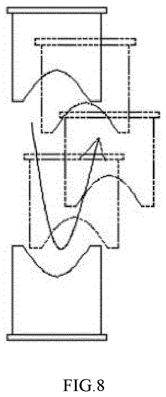

As shown in FIG. 6 and FIG. 8, in a preferred implementation, the first protruding portion 176 is a strip-shaped flange with an upper side surface and a lower side surface being wedge-shaped surfaces, and the second protruding portion 64 is a strip-shaped flange with an arc-shaped cross-section. As the upper jaw assembly 17 moves vertically relative to the lower jaw assembly 6, the first protruding portion 176 and the second protruding portion 64 press against each other, to enable the upper jaw assembly 17 to overcome the elastic force of the elastic member 65 to move toward a side close to the elastic member 65. When the first protruding portion 176 and the second protruding portion 64 are staggered from each other, under the pushing force of the elastic member 65, the upper jaw assembly 17 moves toward a side away from the elastic member 65, so that the upper jaw assembly 17 sways transversely while moving vertically. As shown in FIG. 8, the movement between the upper teeth 18 and the lower teeth 63 presents an elliptical form. The upper teeth 18 and the lower teeth 63 transversely rub against each other to break down food, thereby simulating a process of crushing and grinding food in the oral cavity.

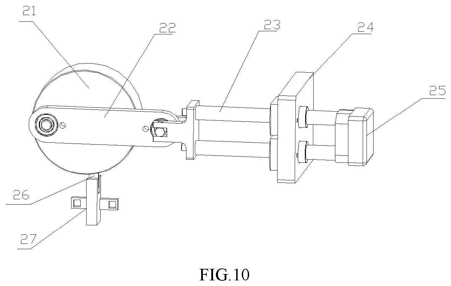

FIG. 10 shows the bionic cheeks movement assembly 2 in the present application. The bionic cheeks movement assembly 2 comprises a second crank slider mechanism 16 and a bionic cheeks jacking block 25 driven by the second crank slider mechanism 16. The second crank slider mechanism 16 comprises a second eccentric wheel 21, a second motor for driving the second eccentric wheel 21 to rotate, a second connecting rod 22, and a second sliding rod 23. One end of the second connecting rod 22 is rotatably connected to the second eccentric wheel 21. The other end of the second connecting rod 22 is rotatably connected to an end of the second sliding rod 23. The bionic cheeks movement assembly 2 further comprises a second fixing plate. The second sliding rod 23 is transversely slidably mounted on the second fixing plate. An end portion of the second sliding rod 23 is capable of driving the bionic cheeks jacking block 25 to push the cheeks film 61.

The bionic cheeks movement assembly 2 further comprises a second sensing sheet 26 mounted on the second eccentric wheel 21 and a second sensor 27 corresponding to the second sensing sheet 26. Every time when the second eccentric wheel 21 rotates one circle, the second sensing sheet 26 passes through the second sensor 27 once. When the second sensor 27 senses the second sensing sheet 26, a control signal is sent to a second drive motor, and the second drive motor is controlled to pause a while to simulate the movement pattern of the cheeks during mastication in the oral cavity.

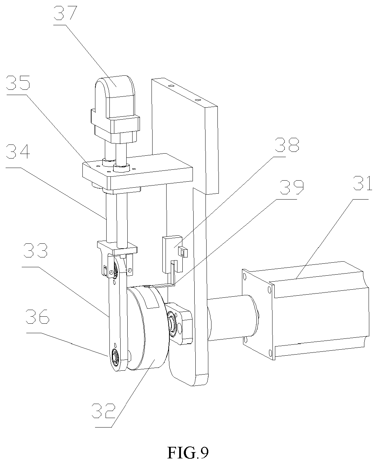

FIG. 9 shows the bionic tongue movement assembly 3 in the present application. The bionic tongue movement assembly 3 comprises a third crank slider mechanism 16 and a bionic tongue jacking block 37 driven by the third crank slider mechanism 16. The third crank slider mechanism 16 comprises a third eccentric wheel 32, a third motor 31 for driving the third eccentric wheel 32 to rotate, a third connecting rod 33, and a third sliding rod 34. One end of the third connecting rod 33 is rotatably connected to the third eccentric wheel 32. The other end of the third connecting rod 33 is rotatably connected to one end of the third sliding rod 34. The bionic tongue movement assembly further comprises a third fixing plate 35. The third sliding rod 34 is vertically slidably mounted on the third fixing plate 35. An end portion of the third sliding rod 34 is capable of driving the bionic tongue jacking block 37 to push the tongue film.

The bionic tongue movement assembly further comprises a third sensing sheet 39 mounted on the third eccentric wheel 32 and a third sensor 38 corresponding to the third sensing sheet 39. Every time when the third eccentric wheel 32 rotates one circle, the third sensing sheet 39 passes through the third sensor 38 once. When the third sensor 38 senses the third sensing sheet 39, a control signal is sent to a third drive motor, and the third drive motor is controlled to pause a while to simulate the movement pattern of the tongue during mastication in the oral cavity.

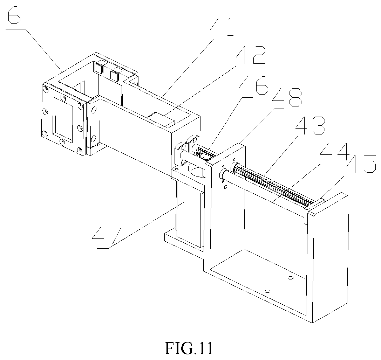

FIG. 11 shows the feeding movement assembly 4 in the present application. The feeding movement assembly 4 comprises a feeding channel 41. The feeding channel 41 is in communication with the front side of the lower jaw assembly 6. A feeding jacking block 42 is disposed in the feeding channel 41. The feeding jacking block 42 is used to push food in the feeding channel 41 to the lower jaw assembly 6. The feeding movement assembly 4 further comprises a drive assembly for driving the feeding jacking block 42 to move.

The drive assembly comprises a rack 43 and a pushing rod 44, and the rack 43 is connected to the feeding jacking block 42. The rack 43 and the pushing rod 44 are disposed in parallel to each other. The drive assembly further comprises a fourth motor 47 and a gear 46 driven by the fourth motor 47. The gear is 46 engaged with the rack 43.

The feeding movement assembly 4 further comprises a vertically disposed fourth fixing plate 48. The rack 43 and the pushing rod 44 slidably pass through the fourth fixing plate 48. The distal ends of the rack 43 and the pushing rod 44 are fixedly connected by a connecting block 45.

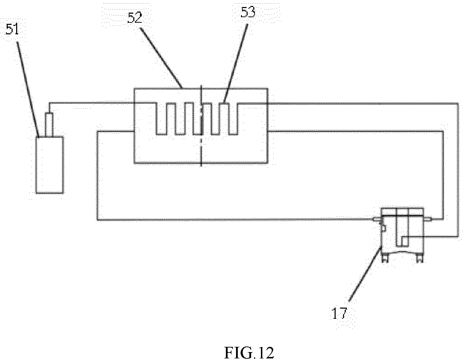

FIG. 12 shows the saliva injection assembly 5 in the present application. The saliva injection assembly 5 comprises an injection cylinder 51, a water bath pot 52 in communication with the injection cylinder 51, and a heating coil. The water bath pot 52 is in communication with the circulating water ports of the upper jaw assembly 17 to form water circulation. The heating coil is used to heat a liquid in the water bath pot 52. The heating coil can heat the liquid in the water bath pot 52 to about 37°C to simulate human saliva. The saliva injection assembly 5 further comprises a fifth drive motor used to convey the liquid in the water bath pot 52 into the upper jaw assembly 17.

The blockage assembly 7 comprises a blockage sheet used to block the discharge port 66 and a fifth motor used to drive the blockage sheet to move longitudinally. During mastication in the oral cavity, the blockage sheet blocks the discharge port, to prevent food in the oral cavity from flowing leaking. After mastication is completed, the blockage sheet is driven by the fifth motor to leave the discharge port 66. The feeding jacking block 42 jacks food out of the oral cavity through the discharge port.

A working procedure of the bionic oral cavity device in the present application is as follows: Step 1: Find the origin
1. The sensing sheets in the present application are returned to the sensors to find the origin. The liquid in the water bath pot 52 is heated to 37°C. The water bath pot 52 is in communication with the upper jaw assembly 17 to form a water circulation system.
2. The second crank slider mechanism 16 drives the bionic cheeks jacking block 25 to make the bionic cheeks jacking block 25 and the cheeks film 61 contact.
3. The first crank slider mechanism 16 drives the upper jaw assembly 17 to move away from the lower jaw assembly 6 to open the upper portion of the oral cavity.
4. The third crank slider mechanism 16 drives the bionic tongue jacking block 37 to make the bionic tongue jacking block 37 and the tongue film contact.
5. The fourth motor 47 drives the feeding jacking block 42 to leave the lower jaw assembly 6 by 630 mm, so that the front side of the oral cavity is open to make space for food.
6. The fifth motor drives the blockage sheet to block the discharge port 66 of the lower jaw assembly.

### Step 2: Feed

1. Place food (solid or liquid) of 30 g to 50 g in the feeding channel 41.
2. Turn on the fourth motor 47. The feeding jacking block 42 pushes the food to enter the lower jaw assembly 6, and then returns to the initial position.

### Step 3: Crush food

1. The third crank slider mechanism 16 pushes the bionic tongue jacking block 37 to push the tongue film to move upward by about 30 mm. The tongue film holding the food protrudes to make the food slide to left and right sides and enter the chewing range of the teeth. The third crank slider mechanism 16 drives the bionic tongue jacking block 37 to move downward by about 30 mm to return to the origin.
2. The second crank slider mechanism 16 drives the bionic cheeks jacking block to make the bionic cheeks jacking block 25 leave the cheeks film 61.
3. The saliva injection assembly 5 injects saliva into the upper jaw assembly 17.
4. The second crank slider mechanism 16 drives the upper jaw assembly 17 to move downward by 30 mm and then upward by 30 mm. The upper jaw reciprocates vertically to crush the food.
5. Repeat 1 to 4 until the food is completely crushed.

### Step 4: Evacuate

1. The second crank slider mechanism 16 drives the bionic cheeks jacking block until the cheeks film 61 is attached to the teeth to stop moving. In this way, food between the cheeks film 61 and the teeth are pushed to flow out from a throat portion.
2. The third crank slider mechanism 16 pushes the bionic tongue jacking block 37 to be attached to the tongue film.
3. The fifth motor drives the blockage sheet to leave the discharge port 66.
4. The fourth motor 47 drives the feeding jacking block 42 to move forward by about 100 mm, to completely push the food out of the oral cavity.
5. The foregoing four steps are repeated to consume the food for experiment.

### Step 5: Clean

1. The second crank slider mechanism 16 drives the upper jaw assembly 17 to move upward until the upper jaw moves to the topmost end, making space to facilitate the removal of the upper jaw assembly 17 and the lower jaw assembly 6.
2. The second crank slider mechanism 16 drives the bionic cheeks jacking block to reach the position farthest away from the cheeks film 61, making space to facilitate the removal of the upper jaw assembly 17 and the lower jaw assembly 6.
3. Disassemble the feeding movement assembly 4.
4. Remove the upper jaw assembly 17 and the lower jaw assembly 6, and slide out the teeth on the upper jaw assembly 17 and the lower jaw assembly 6 one by one, to facilitate the cleaning of the oral cavity and the teeth.

The bionic oral cavity device in the present application has the following beneficial effects:
1. The bionic upper jaw movement assembly 1 in the present application can move transversely as well as vertically to complete crushing and grinding of food, thereby simulating a process that food breaks down in the oral cavity.
2. The bionic upper jaw movement assembly in the present application is provided with a pressure sensor 15. A pressure at which an upper jaw assembly 17 presses downward can be controlled according to a pressure measured by the pressure sensor 15, so that a chewing force can be adequately controlled, and indexes such as hardness and springiness of food can be objectively evaluated.
3. The lower jaw assembly 6 in the present application is made of a transparent material, making it convenient for an experimenter to observe a process that food breaks down inside the oral cavity.
4. The lower jaw assembly 6 in the present application has a cheeks film 61 and a tongue film that are made of an elastic and transparent material, which coordinate with the bionic cheeks movement assembly 2 and the bionic tongue movement assembly to simulate the cheeks and tongue of the oral cavity.
5. The saliva injection assembly 5 in the present application can inject a liquid at about 37°C into the upper jaw assembly 17, making temperature in the oral cavity close to the real temperature of human body.
6. The teeth in the present application can slide into a clamping groove, so that the teeth are stable and fixed and can be conveniently disassembled and cleaned.

The foregoing embodiments are merely preferred embodiments used to fully describe the present invention, and the protection scope of the present invention is not limited thereto. Equivalent replacements or variations made by a person skilled in the art to the present invention all fall within the protection scope of the present invention. The protection scope of the present invention is as defined in the claims.

## Claims

1. A bionic oral cavity device, comprising: a bionic lower jaw assembly (6), a bionic upper jaw movement assembly (1) disposed at an upper side of the lower jaw assembly (6), a bionic cheeks movement assembly(2) disposed on left and right sides of the lower jaw assembly (6), a bionic tongue movement assembly (3) disposed on a lower side of the lower jaw assembly (6), a feeding movement assembly (4) disposes on a front side of the lower jaw assembly (6), a blockage assembly (7) disposed on a rear side of the lower jaw assembly (6), and a saliva injection assembly (5) ;
wherein the bionic upper jaw movement assembly (1) comprises an upper jaw assembly (17) and a first crank slider mechanism controlling the upper jaw assembly (17) to move vertically, the first crank slider mechanism comprises a first eccentric wheel (11), a first motor (112) driving the first eccentric wheel (11) to rotate, a first connecting rod (12), and a first sliding rod (14), an upper end of the first connecting rod (12) is rotatably connected to the first eccentric wheel (11), a lower end of the first connecting rod (12) is rotatably connected to an upper end of the first sliding rod (14), the bionic upper jaw movement assembly (1) further comprises a first fixing plate (19), the first sliding rod (14) is vertically slidably mounted on the first fixing plate (19), a lower end of the first sliding rod (14) is capable of driving the upper jaw assembly (17) to move vertically, the bionic upper jaw movement assembly (1) further comprises a first sensing sheet (110) mounted on the first eccentric wheel (11) and a first sensor (111) corresponding to the first sensing sheet (110) whereby every time the first eccentric wheel (11) rotates one circle, the first sensing sheet (110) passes through the first sensor (111) once, and when the first sensor (111) senses the first sensing sheet (110), a pause signal is sent to the first drive motor, and thereby the first drive motor is controlled to pause;
wherein a pressure sensor (15) is further disposed between the lower end of the first sliding rod (14) and the upper jaw assembly (17), a slider (16) is further disposed on the upper jaw assembly (17), the slider (16) is transversely slidably connected to an upper side of the upper jaw assembly (17), and the lower end of the first sliding rod (14) is fixedly connected to the slider (16);
wherein the upper jaw assembly (17) comprises an upper jaw body (171) and an upper cover (172) disposed on the upper jaw body (171), the upper jaw body (171) has a cavity (174) with an opening facing upward, an elastic sealing member (173) is disposed at the opening of the cavity (174), the upper cover (172) covers the opening of the cavity (174), the elastic sealing member (173) produces a sealing effect, and two circulating water ports (175) allowing communication between the cavity (174) and external circulating water are further provided on the upper jaw body (171);
wherein upper teeth (18) are mounted under the upper jaw body (171); wherein the lower jaw assembly (6) comprises a bottom wall, two transversely disposed sidewalls, and a rear wall located behind the two sidewalls, a discharge port (66) is provided in the rear wall; wherein the blockage assembly (7) comprises a blockage sheet blocking the discharge port (66), a fifth motor driving the blockage sheet to move longitudinally; during a mastication in the oral cavity, the blockage sheet is capable of blocking the discharge port (66); wherein two rows of lower teeth (63) corresponding to the upper teeth (18) are provided on the bottom wall, the upper jaw assembly (17) is capable of being driven by the first crank slider mechanism to be inserted into the lower jaw assembly (6), so that the upper teeth (18) and the lower teeth (63) contact and press against each other; wherein a cheeks film (61) is disposed on the two sidewalls of the lower jaw assembly (6), a tongue film (62) is provided on the bottom wall, and the cheeks film (61) and the tongue film (62) are transparent elastic films; and
wherein the feeding movement assembly (4) comprises a feeding channel (41), the feeding channel (41) is in communication with the front side of the lower jaw assembly (6), a feeding jacking block (42) is disposed in the feeding channel (41), pushing food in the feeding channel (41) to the lower jaw assembly (6), the feeding movement assembly (4) further comprises a drive assembly for driving the feeding jacking block (42) to move, the drive assembly comprises a rack (43) and a pushing rod (44) that are connected to the feeding jacking block (42), the rack (43) and the pushing rod (44) are disposed in parallel to each other, the drive assembly further comprises a fourth motor (47) and a gear (46) driven by the fourth motor (47), the gear (46) is engaged with the rack (43), the feeding movement assembly (4) further comprises a vertically disposed fourth fixing plate (48), the rack (43) and the pushing rod (44) slidably pass through the fourth fixing plate (48), and distal ends of the rack (43) and the pushing rod (44) are fixedly connected by a connecting block (45).

2. The bionic oral cavity device according to claim 1, wherein a first protruding portion (176) is disposed on either a left side or a right side of the upper jaw body (171), a second protruding portion (64) matching the first protruding portion (176) is disposed on one sidewall of the lower jaw assembly (6), an elastic member (65) is disposed on the other sidewall of the lower jaw assembly (6), the elastic member (65) is capable of applying a pushing force to the upper jaw assembly (17), and as the upper jaw assembly (17) moves downward, the second protruding portion (64) is capable of pressing the first protruding portion (176), to enable the upper jaw assembly (17) to overcome the pushing force of the elastic member (65) to move toward a side close to the elastic member (65).

3. The bionic oral cavity device according to claim 1, wherein the bionic cheeks movement assembly (2) comprises a second crank slider mechanism and a bionic cheeks jacking block (25) driven by the second crank slider mechanism, the second crank slider mechanism comprises a second eccentric wheel (21), a second motor driving the second eccentric wheel (21) to rotate, a second connecting rod (22), and a second sliding rod (23), an end of the second connecting rod (22) is rotatably connected to the second eccentric wheel (21), an other end of the second connecting rod (22) is rotatably connected to an end of the second sliding rod (23), the bionic cheeks movement assembly (2) further comprises a second fixing plate, the second sliding rod (23) is transversely slidably mounted on the second fixing plate, and an end portion of the second sliding rod (23) is capable of driving the bionic cheeks jacking block (25) to push the cheeks film (61).

4. The bionic oral cavity device according to claim 1, wherein the bionic tongue movement assembly (3) comprises a third crank slider mechanism and a bionic tongue jacking block (37) driven by the third crank slider mechanism, the third crank slider mechanism comprises a third eccentric wheel (32), a third motor (31) driving the third eccentric wheel (32) to rotate, a third connecting rod (33), and a third sliding rod (34), an end of the third connecting rod (33) is rotatably connected to the third eccentric wheel (32), an other end of the third connecting rod (33) is rotatably connected to an end of the third sliding rod (34), the bionic tongue movement assembly (3) further comprises a third fixing plate (35), the third sliding rod (34) is vertically slidably mounted on the third fixing plate (35), and an end portion of the third sliding rod (34) is capable of driving the bionic tongue jacking block (37) to push the tongue film (62).

5. The bionic oral cavity device according to claim 1, wherein the saliva injection assembly (5) comprises an injection cylinder (51), a water bath pot (52) in communication with the injection cylinder (51), and a heating coil (53), the water bath pot (52) is in communication with the upper jaw assembly (17) to form water circulation, and the heating coil (53) heating a liquid in the water bath pot (52).

## Patentansprüche

1. Bionische Mundhöhlenvorrichtung, umfassend: eine bionische Unterkiefereinheit (6), eine an einer oberen Seite der Unterkiefereinheit (6) angeordnete bionische Oberkieferbewegungseinheit (1), eine an den linken und rechten Seiten der Unterkiefereinheit (6) angeordnete bionische Wangenbewegungseinheit (2), eine an einer unteren Seite der Unterkiefereinheit (6) angeordnete bionische Zungenbewegungseinheit (3), eine an einer Vorderseite der Unterkiefereinheit (6) angeordnete Zuführbewegungseinheit (4), eine an einer Rückseite der Unterkiefereinheit (6) angeordnete Blockierungseinheit (7), und eine Speichelinjektionseinheit (5);
wobei die bionische Oberkieferbewegungseinheit (1) eine Oberkiefereinheit (17) und einen ersten Kurbelgleitmechanismus umfasst, der die Oberkiefereinheit (17) steuert, um sich vertikal zu bewegen, wobei der erste Kurbelgleitmechanismus ein erstes exzentrisches Rad (11), einen ersten Motor (112), der das erste exzentrische Rad (11) zum Rotieren antreibt, eine erste Verbindungsstange (12) und eine erste Gleitstange (14) umfasst, wobei ein oberes Ende der ersten Verbindungsstange (12) drehbar mit dem ersten exzentrischen Rad (11) verbunden ist, ein unteres Ende der ersten Verbindungsstange (12) drehbar mit einem oberen Ende der ersten Gleitstange (14) verbunden ist, die bionische Oberkieferbewegungseinheit (1) weiterhin eine erste Fixierplatte (19) umfasst, wobei die erste Gleitstange (14) vertikal gleitend an der ersten Fixierplatte (19) montiert ist, ein unteres Ende der ersten Gleitstange (14) in der Lage ist, die Oberkiefereinheit (17) anzutreiben, um sich vertikal zu bewegen, die bionische Oberkieferbewegungseinheit (1) weiterhin eine erste Sensorfolie (110) umfasst, die am ersten exzentrischen Rad (11) montiert ist, und einen ersten Sensor (111), der der ersten Sensorfolie (110) entspricht, wodurch bei jeder vollständigen Umdrehung des ersten exzentrischen Rades (11) die erste Sensorfolie (110) den ersten Sensor (111) einmal passiert, und wenn der erste Sensor (111) die erste Sensorfolie (110) erfasst, ein Pausensignal an den ersten Motor gesendet ist, wodurch der erste Motor gesteuert ist, um zu pausieren;
wobei ein Drucksensor (15) ferner zwischen dem unteren Ende der ersten Gleitstange (14) und der Oberkiefereinheit (17) angeordnet ist, ein Schieber (16) ferner auf der Oberkiefereinheit (17) angeordnet ist, der Schieber (16) quer gleitend mit einer Oberseite der Oberkiefereinheit (17) verbunden ist und das untere Ende der ersten Gleitstange (14) fest mit dem Schieber (16) verbunden ist;
wobei die Oberkiefereinheit (17) einen Oberkieferkörper (171) und eine auf dem Oberkieferkörper (171) angeordnete obere Abdeckung (172) umfasst, der Oberkieferkörper (171) eine Kavität (174) mit einer nach oben gerichteten Öffnung aufweist, ein elastisches Dichtungselement (173) an der Öffnung der Kavität (174) angeordnet ist, die obere Abdeckung (172) die Öffnung der Kavität (174) abdeckt, das elastische Dichtungselement (173) eine Dichtungswirkung erzeugt und zwei Umwälzwasseranschlüsse (175), die eine Verbindung zwischen der Kavität (174) und externem Umwälzwasser ermöglichen, ferner am Oberkieferkörper (171) vorgesehen sind;
wobei obere Zähne (18) unter dem Oberkieferkörper (171) montiert sind; wobei die Unterkiefereinheit (6) eine Bodenwand, zwei quer angeordnete Seitenwände und eine hinter den zwei Seitenwänden befindliche Rückwand umfasst, wobei in der Rückwand eine Auslassöffnung (66) vorgesehen ist; wobei die Blockierungseinheit (7) eine Blockierungsplatte, welche die Auslassöffnung (66) blockiert, sowie einen fünften Motor umfasst, der die Blockierungsplatte antreibt, um sich in Längsrichtung zu bewegen; während eines Kauvorgangs in der Kavität die Blockierungsplatte in der Lage ist, die Auslassöffnung (66) zu blockieren; wobei zwei Reihen unterer Zähne (63), die den oberen Zähnen (18) entsprechen, auf der Bodenwand vorgesehen sind, die Oberkiefereinheit (17) durch den ersten Kurbelgleitmechanismus angetrieben werden kann, um in die Unterkiefereinheit (6) eingeführt zu werden, sodass die oberen Zähne (18) und die unteren Zähne (63) miteinander in Kontakt kommen und gegeneinander drücken; wobei eine Wangenmembran (61) an den zwei Seitenwänden der Unterkiefereinheit (6) angeordnet ist, eine Zungenmembran (62) auf der Bodenwand vorgesehen ist, und die Wangenmembran (61) und die Zungenmembran (62) transparente elastische Membranen sind; und
wobei die Zuführbewegungseinheit (4) einen Zuführkanal (41) umfasst, wobei der Zuführkanal (41) mit der Vorderseite der Unterkiefereinheit (6) in Verbindung steht, wobei ein Zuführhebeblock (42) im Zuführkanal (41) angeordnet ist, der Nahrung im Zuführkanal (41) zur Unterkiefereinheit (6) schiebt, wobei die Zuführbewegungseinheit (4) weiterhin eine Antriebsanordnung zum Antreiben des Zuführhebeblocks (42) zur Bewegung umfasst, wobei die Antriebsanordnung eine Zahnstange (43) und eine Druckstange (44) umfasst, die mit dem Zuführhebeblock (42) verbunden sind, wobei die Zahnstange (43) und die Druckstange (44) parallel zueinander angeordnet sind, wobei die Antriebsanordnung weiterhin einen vierten Motor (47) und ein vom vierten Motor (47) angetriebenes Zahnrad (46) umfasst, wobei das Zahnrad (46) mit der Zahnstange (43) im Eingriff steht, wobei die Zuführbewegungseinheit (4) weiterhin eine vertikal angeordnete vierte Fixierplatte (48) umfasst, wobei die Zahnstange (43) und die Druckstange (44) gleitend durch die vierte Fixierplatte (48) hindurchgehen und distale Enden der Zahnstange (43) und der Druckstange (44) durch einen Verbindungsblock (45) fest verbunden sind.

2. Bionische Mundhöhlenvorrichtung nach Anspruch 1, wobei ein erstes Vorsprungsteil (176) entweder auf einer linken Seite oder einer rechten Seite des Oberkieferkörpers (171) angeordnet ist, ein zweites Vorsprungsteil (64), das dem ersten Vorsprungsteil (176) entspricht, auf einer Seitenwand der Unterkiefereinheit (6) angeordnet ist, ein elastisches Element (65) auf der anderen Seitenwand der Unterkiefereinheit (6) angeordnet ist, wobei das elastische Element (65) in der Lage ist, eine Schubkraft auf die Oberkiefereinheit (17) auszuüben, und wenn sich die Oberkiefereinheit (17) nach unten bewegt, das zweite Vorsprungsteil (64) in der Lage ist, das erste Vorsprungsteil (176) zu drücken, um der Oberkiefereinheit (17) zu ermöglichen, die Schubkraft des elastischen Elements (65) zu überwinden, um sich in Richtung einer Seite nahe dem elastischen Element (65) zu bewegen.

3. Bionische Mundhöhlenvorrichtung nach Anspruch 1, wobei die bionische Wangenbewegungseinheit (2) einen zweiten Kurbelgleitmechanismus und einen bionischen Wangenhebeblock (25) umfasst, der durch den zweiten Kurbelgleitmechanismus angetrieben ist, wobei der zweite Kurbelgleitmechanismus ein zweites exzentrisches Rad (21), einen zweiten Motor, der das zweite exzentrische Rad (21) zum Rotieren antreibt, eine zweite Verbindungsstange (22) und eine zweite Gleitstange (23) umfasst, wobei ein Ende der zweiten Verbindungsstange (22) drehbar mit dem zweiten exzentrischen Rad (21) verbunden ist, ein anderes Ende der zweiten Verbindungsstange (22) drehbar mit einem Ende der zweiten Gleitstange (23) verbunden ist, die bionische Wangenbewegungseinheit (2) weiterhin eine zweite Fixierplatte umfasst, wobei die zweite Gleitstange (23) quer gleitend auf der zweiten Fixierplatte montiert ist, und ein Endabschnitt der zweiten Gleitstange (23) in der Lage ist, den bionischen Wangenhebeblock (25) anzutreiben, um die Wangenmembran (61) zu drücken.

4. Bionische Mundhöhlenvorrichtung nach Anspruch 1, wobei die bionische Zungenbewegungseinheit (3) einen dritten Kurbelgleitmechanismus und einen bionischen Zungenfixierungsblock (37) umfasst, der durch den dritten Kurbelgleitmechanismus angetrieben ist, wobei der dritte Kurbelgleitmechanismus ein drittes exzentrisches Rad (32), einen dritten Motor (31), der das dritte exzentrische Rad (32) zur Rotation antreibt, eine dritte Verbindungsstange (33) und eine dritte Gleitstange (34) umfasst, wobei ein Ende der dritten Verbindungsstange (33) drehbar mit dem dritten exzentrischen Rad (32) verbunden ist, ein anderes Ende der dritten Verbindungsstange (33) drehbar mit einem Ende der dritten Gleitstange (34) verbunden ist, wobei die bionische Zungenbewegungseinheit (3) weiterhin eine dritte Fixierplatte (35) umfasst, wobei die dritte Gleitstange (34) vertikal gleitend an der dritten Fixierplatte (35) montiert ist und ein Endabschnitt der dritten Gleitstange (34) in der Lage ist, den bionischen Zungenfixierungsblock (37) anzutreiben, um die Zungenmembran (62) zu drücken.

5. Bionische Mundhöhlenvorrichtung nach Anspruch 1, wobei die Speichelinjektionseinheit (5) einen Injektionszylinder (51), einen mit dem Injektionszylinder (51) in Verbindung stehenden Wasserbadtopf (52) und eine Heizspule (53) umfasst, wobei der Wasserbadtopf (52) mit der Oberkiefereinheit (17) zur Bildung eines Wasserkreislaufs in Verbindung steht, und die Heizspule (53) eine Flüssigkeit im Wasserbadtopf (52) erhitzt.

## Revendications

1. Dispositif de cavité buccale bionique, comprenant : un ensemble mâchoire inférieure bionique (6), un ensemble mouvement de mâchoire supérieure bionique (1) disposé au-dessus de l'ensemble mâchoire inférieure (6), un ensemble mouvement de joues bionique (2) disposé sur les côtés gauche et droit de l'ensemble mâchoire inférieure (6), un ensemble mouvement de langue bionique (3) disposé sous l'ensemble mâchoire inférieure (6), un ensemble mouvement d'alimentation (4) disposé sur un côté avant de l'ensemble mâchoire inférieure (6), un ensemble blocage (7) disposé sur un côté arrière de l'ensemble mâchoire inférieure (6), et un ensemble injection de salive (5) ; dans lequel : l'ensemble mouvement de mâchoire supérieure bionique (1) comprend un ensemble mâchoire supérieure (17) et un premier mécanisme coulisseau-manivelle configuré pour contrôler le mouvement vertical de l'ensemble mâchoire supérieure (17), le premier mécanisme coulisseau-manivelle comprend :
∘ une première roue excentrique (11),
∘ un premier moteur (112) entraînant la première roue excentrique (11),
∘ une première bielle (12), et
∘ une première tige coulissante (14), une extrémité supérieure de la première bielle (12) est reliée de manière pivotante à la première roue excentrique (11), une extrémité inférieure de la première bielle (12) est reliée de manière pivotante à une extrémité supérieure de la première tige coulissante (14), l'ensemble mouvement de mâchoire supérieure bionique (1) comprend en outre une première plaque de fixation (19), la première tige coulissante (14) est montée de manière coulissante verticale sur la première plaque de fixation (19), une extrémité inférieure de la première tige coulissante (14) entraîne l'ensemble mâchoire supérieure (17) à se déplacer verticalement, l'ensemble mouvement de mâchoire supérieure bionique (1) comprend en outre :une première plaquette de détection (110) montée sur la première roue excentrique (11), et un premier capteur (111) correspondant à la première plaquette de détection (110), dans lequel chaque rotation complète de la première roue excentrique (11) provoque le passage de la première plaquette de détection (110) devant le premier capteur (111) une fois, et lorsqu'elle est détectée, un signal de pause est envoyé au premier moteur pour interrompre temporairement son fonctionnement
un capteur de pression (15) est disposé entre l'extrémité inférieure de la première tige coulissante (14) et l'ensemble mâchoire supérieure (17), un curseur (16) est disposé sur l'ensemble mâchoire supérieure (17) et est relié de manière coulissante transversale à une partie supérieure de l'ensemble mâchoire supérieure (17), l'extrémité inférieure de la première tige coulissante (14) est fixée au curseur (16) ;
l'ensemble mâchoire supérieure (17) comprend :
∘ un corps de mâchoire supérieure (171),
∘ un couvercle supérieur (172) disposé sur le corps de mâchoire supérieure (171),
∘ une cavité (174) formée dans le corps de mâchoire supérieure (171) avec une ouverture orientée vers le haut,
∘ un joint élastique (173) au niveau de l'ouverture de la cavité (174),
∘ Le capot supérieur (172) recouvre l'ouverture de la cavité (174), et l'élément d'étanchéité élastique (173) assure un effet d'étanchéité,
∘ deux orifices de circulation d'eau (175), permettant la communication entre la cavité (174) et un circuit d'eau externe, sont également intégrés au niveau du corps de la mâchoire supérieure (171) ; des dents supérieures (18) sont montées sous le corps de mâchoire supérieure (171) ;
l'ensemble de mâchoire inférieure (6) comprend :
∘ une paroi inférieure,
∘ deux parois latérales disposées transversalement,
∘ une paroi arrière située à l'arrière des deux parois latérales,
∘ un orifice de décharge (66) est prévu dans la paroi arrière,
∘ l'ensemble de blocage (7) comprend une plaque obturatrice bloquant l'orifice de décharge (66) et un cinquième moteur entraînant le déplacement longitudinal de cette plaque, lors de la mastication dans la cavité buccale, la plaque obturatrice est conçue pour obturer hermétiquement l'orifice de dé charge (66),
∘ L'ensemble de blocage (7) comprend une feuille de blocage obstruant l'orifice de décharge (66) et un cinquième moteur entraînant le déplacement longitudinal de la feuille de blocage, pendant la mastication dans la cavité buccale, la feuille de blocage est capable d'obturer l'orifice de décharge (66) deux rangées de dents inférieures (63) correspondant aux dents supérieures (18) sont disposées sur la paroi inférieure, l'ensemble mâchoire supérieure (17) est entraîné par le premier mécanisme coulisseau-manivelle pour s'engager avec l'ensemble mâchoire inférieure (6), provoquant le contact et la pression mutuelle des dents supérieures (18) et inférieures (63) ; un film de joues (61) est disposé sur les parois latérales, un film de langue (62) est prévu sur la paroi inférieure, les deux films (61, 62) sont transparents et élastiques ;
l'ensemble mouvement d'alimentation (4) comprend :
∘ un canal d'alimentation (41) en communication avec le côté avant de l'ensemble mâchoire inférieure (6),
∘ un bloc de poussée d'alimentation (42) à l'intérieur du canal d'alimentation (41) pour pousser les aliments dans l'ensemble mâchoire inférieure (6), l'ensemble de mouvement d'alimentation (4) comprend également un mécanisme d'entraînement pour déplacer le bloc de levage d'alimentation (42), ce mécanisme d'entraînement comporte une crémaillère (43) et une tige de poussée (44) reliés au bloc de levage (42), la crémaillère (43) et la tige de poussée (44) sont disposées parallèlement l'une à l'autre, le mécanisme intègre en outre un quatrième moteur (47) ainsi qu'un pignon (46) entraîné par ce moteur, le pignon (46) est fixé sur une quatrième plaque de fixation (48), tandis que les extrémités distales de la crémaillère (43) et de la tige de poussée (44) sont solidarisées par un bloc de liaison (45).

2. Dispositif de cavité buccale bionique selon la revendication 1, dans lequel : une première partie saillante (176) est disposée sur l'un des côtés gauche ou droit du corps de mâchoire supérieure (171), une deuxième partie saillante (64) correspondant à la première partie saillante (176) est disposée sur une paroi latérale de l'ensemble mâchoire inférieure (6), un élément élastique (65) est disposé sur l'autre paroi latérale de l'ensemble mâchoire inférieure (6), l'élément élastique (65) applique une force de poussée sur l'ensemble mâchoire supérieure (17), lors du mouvement descendant de l'ensemble mâchoire supérieure (17), la deuxième partie saillante (64) presse la première partie saillante (176), provoquant le déplacement de l'ensemble mâchoire supérieure (17) contre la force de poussée vers le côté proche de l'élément élastique (65).

3. Dispositif de cavité buccale bionique selon la revendication 1, dans lequel l'ensemble de mouvement des joues bioniques (2) comprend un mécanisme coulisseau-manivelle secondaire et un bloc élévateur de joues bioniques (25) entraîné par ce m écanisme, le mécanisme coulisseau-manivelle secondaire comporte :
une roue excentrique secondaire (21),
un deuxième moteur entraînant la rotation de la roue excentrique (21),
une bielle secondaire (22),et une tige coulissante secondaire (23),
une extrémité de la bielle secondaire (22) est articulée en rotation sur la roue excentrique (21), tandis que son autre extrémité est articulée sur une extrémité de la tige coulissante secondaire (23), l'ensemble de mouvement des joues bioniques (2) comprend en outre une plaque de fixation secondaire, la tige coulissante secondaire (23) est montée coulissante transversalement sur cette plaque, et l'extrmité de la tige coulissante (23) est configurée pour entraîner le bloc élévateur de joues bioniques (25) afin de pousser le film de joues (61).

4. Dispositif de cavité buccale bionique selon la revendication 1, dans lequel l'ensemble mouvement de langue bionique (3) comprend: un troisième mécanisme coulisseau-manivelle et un bloc de poussée de langue bionique (37) entraîné par celui-ci, le troisième mécanisme coulisseau-manivelle comprend :
∘ une troisième roue excentrique (32),
∘ un troisième moteur (31) entraînant la troisième roue excentrique (32),
∘ une troisième bielle (33),
∘ une troisième tige coulissante (34), une extrémité de la troisième bielle (33) est reliée de manière pivotante à la troisième roue excentrique (32), l'autre extrémité de la troisième bielle (33) est reliée de manière pivotante à la troisième tige coulissante (34), l'ensemble de mouvement de langue bionique (3) comprend en outre une troisième plaque de fixation (35), la troisième tige coulissante (34) est montée coulissant verticalement sur cette plaque de fixation (35), et l'extrémité de la tige coulissante (34) est configurée pour entraîner le bloc élévateur de langue bionique (37) afin de pousser le film de langue (62).

5. Dispositif de cavité buccale bionique selon la revendication 1, dans lequel l'ensemble d'injection de salive (5) comprend un cylindre d'injection (51), un réservoir de bain-marie (52) en communication avec le cylindre d'injection (51), et une spirale chauffante (53), le réservoir de bain-marie (52) est en communication avec l'ensemble de mâchoire supérieure (17) pour former une circulation d'eau, et la spirale chauffante (53) chauffe un liquide dans le réservoir de bain-marie (52).
